# EUROPEAN PATENT APPLICATION

(11) **EP 4 851 248 A1**
(43) Date of publication of application: **09.12.2026**
(21) Application number: 24921947.8
(22) Date of filing: 27.12.2024
(51) Int. Cl.: C08L 29/04, B32B 27/20, B32B 27/30, C08J 3/12, C08K 3/11, C08K 5/09

(54) **RESIN COMPOSITION, MOLDING MATERIAL, MULTILAYER STRUCTURE, MOLDED BODY, FOOD PACKAGE, AND METHODS FOR PRODUCING RESIN COMPOSITION AND MULTILAYER STRUCTURE**

(30) Priority: 29.01.2024 JP 2024011263; 29.01.2024 JP 2024011266
(71) Applicant: Mitsubishi Chemical Corporation, Tokyo 100-8251 (JP)
(72) Inventor: YAMAMOTO, Nobuyuki, Tokyo 100-8251 (JP); TOMITA, Yuuko, Tokyo 100-8251 (JP); AOYAMA, Masato, Tokyo 100-8251 (JP)
(74) Representative: Hoffmann Eitle
(86) International application number: PCT/JP2024/046319
(87) International publication number: WO 2025/164194

(57) **Abstract**

A resin composition having excellent thermal stability and being capable of suppressing coloration due to thermal degradation is provided. A resin composition containing a polyvinyl alcohol resin, a nickel compound, and a compound (X), the polyvinyl alcohol resin being an ethylene-modified polyvinyl alcohol resin having 1 to 19 mol% of an ethylene structural unit, the compound (X) being at least one selected from the group consisting of an alkaline earth metal compound, acetic acid other than the alkaline earth metal compound, and a salt of the acetic acid, and a content of the nickel compound in terms of metal being from 0.0001 to 2 ppm with respect to a mass of the resin composition.

## Description

### Technical Field

The present disclosure relates to a resin composition containing a polyvinyl alcohol resin, a molding material, a multilayer structure, a molded body, a food package, and methods for producing a resin composition and a multilayer structure.

### Background Art

Polyvinyl alcohol resin (hereinafter may be referred to as "PVA resin") has excellent film-forming properties, transparency, strength characteristics, and surface activity, as one of the few crystalline water-soluble polymers. Thus, the PVA resin is widely used in, for example, modifiers for paper such as coating agents for paper and internal additives for paper, adhesives for paper, wood, inorganic substances, and the like, stabilizers for emulsion polymerization and suspension polymerization, and optical films.

However, the PVA resin generally has a problem in thermal stability. For example, the melting point and the thermal decomposition temperature of the PVA resin are very close to each other. Thus, it is difficult for the PVA resin to be subjected to hot melt-molding, and the PVA resin has been used in the state of an aqueous solution.

In order to improve the thermal stability, for example, Patent Literature 1 has proposed an ethylene-modified PVA resin composition having a specific degree of polymerization and a specific degree of saponification, having a carboxy group in a predetermined amount and a lactone ring in a predetermined amount, and containing from 2 to 19 mol% of an ethylene unit.

Patent Literature 2 has proposed a resin composition containing from 0.01 to 3 mmol (586 ppm or greater) of a metal salt per 1 g of a PVA resin, in order to melt-mold the PVA resin.

Patent Literature 3 has disclosed a PVA fiber containing a predetermined amount of a transition metal and describes that as a PVA polymer, the PVA fiber may be modified with ethylene.

### Citation List

### Patent Literature

Patent Literature 1: JP2000-309607A
Patent Literature 2: JPH06-47628 B
Patent Literature 3: JP2000-336574A

### Summary

### Technical Problem

According to studies of the present inventors, the technique described in Patent Literature 1 has a certain effect on the thermal stability, but the thermal stability is still insufficient. Thus, there has been a problem of coloration due to thermal degradation.

Furthermore, both of the techniques described in Patent Literatures 2 and 3 were each a resin composition containing only a nickel compound as a metal salt, the thermal stability is not improved by addition of a small amount of the nickel compound, and thus there has been a problem of coloration due to thermal degradation.

Under such a background, the present disclosure provides a resin composition having excellent thermal stability and being capable of suppressing coloration due to thermal degradation.

### Solution to Problem

As a result of intensive studies in view of such circumstances, the present inventors have found that a resin composition having excellent thermal stability and being capable of suppressing coloration due to thermal degradation can be obtained by incorporating a trace amount of a nickel compound and a specific compound (X) in an ethylene-modified PVA resin in the resin composition.

That is, the present disclosure provides the following aspects.
[1] A resin composition containing a PVA resin, a nickel compound, and a compound (X),
   the PVA resin being an ethylene-modified PVA resin having 1 to 19 mol% of an ethylene structural unit,
   the compound (X) being at least one selected from the group consisting of an alkaline earth metal compound, acetic acid other than the alkaline earth metal compound, and a salt of the acetic acid other than the alkaline earth metal compound, and
   a content of the nickel compound in terms of metal being from 0.0001 to 2 ppm with respect to a mass of the resin composition.
[2] The resin composition according to [1], containing the alkaline earth metal compound as the compound (X).
[3] The resin composition according to [2], wherein a content of the alkaline earth metal compound in terms of metal is from 0.0001 to 1 ppm with respect to the mass of the resin composition.
[4] The resin composition according to [2] or [3], containing a magnesium compound as the alkaline earth metal compound.
[5] The resin composition according to any one of [2] to [4], wherein a mass ratio of a content of the alkaline earth metal compound in terms of metal to the content of the nickel compound in terms of metal is from 0.000005 to 10000.
[6] The resin composition according to any one of [1] to [5], containing the acetic acid and/or the salt thereof other than the alkaline earth metal compound, as the compound (X).
[7] The resin composition according to [6], wherein a content of the acetic acid and/or the salt thereof is from 10 to 10000 ppm with respect to the mass of the resin composition.
[8] The resin composition according to [6] or [7], wherein a mass ratio of a content of the acetic acid and/or the salt thereof to the content of the nickel compound is from 5 to 100000000.
[9] The resin composition according to any one of [1] to [8], wherein the content of the nickel compound in terms of metal is 0.0001 ppm or greater and less than 0.5 ppm with respect to the mass of the resin composition.
[10] The resin composition according to any one of [1] to [9], wherein the PVA resin is non-crosslinked.
[11] A molding material containing the resin composition according to any one of [1] to [10].
[12] The molding material according to [11], wherein the molding material is in a pellet form.
[13] A multilayer structure including a layer containing the resin composition according to any one of [1] to [10].
[14] A molded body including the multilayer structure according to [13].
[15] A food package including the multilayer structure according to [13].
[16] A method for producing the resin composition according to any one of [1] to [10], the method including:
   melt-mixing a composition raw material containing the PVA resin and the nickel compound.
[17] A method for producing the multilayer structure according to [13], the method including:
   melt-molding a layer containing the resin composition.

### Advantageous Effects

The resin composition of the present disclosure has excellent thermal stability and is capable of suppressing coloration due to thermal degradation. A molding material, a molded body, and a food package each containing the resin composition of the present disclosure, and a multilayer structure having a layer containing the resin composition of the present disclosure are also excellent in thermal stability and capable of suppressing coloration due to thermal degradation.

### Description of Embodiments

Embodiments of the present disclosure will be specifically described below but the present disclosure is not limited thereto.

In the present specification, "x and/or y (x and y are any configurations)" means at least one of x and y, and means three ways of x only, y only, and x and y.

The meaning of the expression "X to Y" (X and Y are any numerals) includes "X or more and Y or less" and "preferably more than X" or "preferably less than Y" unless otherwise specified.

When the expression "X or more" (X is any numeral) or "Y or less" (Y is any numeral) is used, the expression also includes the meaning of "preferably more than X" or "preferably less than Y".

In the present specification, for numerical ranges described stepwise, the upper limit value or the lower limit value of a numerical range in a certain step can be optionally combined with the upper limit value or the lower limit value of a numerical range in another step. In addition, for a numerical range described herein, the upper limit value or the lower limit value of the numerical range can be replaced by a value shown in Examples.

In the present specification, the meaning of the term "layer" also includes a relatively thin layer such as a "film", a "tape", or a "sheet" in addition to a thick layer.

The resin composition according to an embodiment of the present disclosure (hereinafter referred to as "the present resin composition") contains a PVA resin and a compound (X) and a specific trace amount of a nickel compound. The compound (X) contains at least one selected from the group consisting of an alkaline earth metal compound, acetic acid other than the alkaline earth metal compound, and a salt of the acetic acid other than the alkaline earth metal compound.

That is, in the present resin composition, the base resin is the PVA resin, and the content of the PVA resin in the present resin composition is usually 70 mass% or more, preferably 80 mass% or more, more preferably 90 mass% or more, and still more preferably 95 mass% or more.

The case where the compound (X) of the present resin composition contains the alkaline earth metal compound is referred to as a "first aspect", and the case where the compound (X) contains the acetic acid and/or the salt thereof other than the alkaline earth metal compound is referred to as a "second aspect", and these aspects will be explained in this order.

### First Aspect

The first aspect includes the following aspects <I-1> to <I-13>.
<I-1> A resin composition containing a PVA resin, a nickel compound, and an alkaline earth metal compound,
   the PVA resin being an ethylene-modified PVA resin containing from 1 to 19 mol% of an ethylene structural unit, and
   a content of the nickel compound in terms of metal being from 0.0001 to 2 ppm with respect to a mass of the resin composition.
<I-2> The resin composition according to <I-1>, wherein a content of the alkaline earth metal compound in terms of metal is from 0.0001 to 1 ppm with respect to the mass of the resin composition.
<I-3> The resin composition according to <I-1> or <I-2>, containing a magnesium compound as the alkaline earth metal compound.
<I-4> The resin composition according to any one of <I-1> to <I-3>, wherein the content of the nickel compound in terms of metal is 0.0001 ppm or greater and less than 0.5 ppm with respect to the mass of the resin composition.
<I-5> The resin composition according to any one of <I-1> to <I-4>, wherein a mass ratio of a content of the alkaline earth metal compound in terms of metal to the content of the nickel compound in terms of metal is from 0.000005 to 10000.
<I-6> The resin composition according to any one of <I-1> to <I-5>, wherein the PVA resin is non-crosslinked.
<I-7> A molding material containing the resin composition according to any one of <I-1> to <I-6>.
<I-8> The molding material according to <I-7>, wherein the molding material is in a pellet form.
<I-9> A multilayer structure including a layer containing the resin composition according to any one of <I-1> to <I-6>.
<I-10> A molded body including the multilayer structure according to <I-9>.
<I-11> A food package including the multilayer structure according to <I-9>.
<I-12> A method for producing the resin composition according to any one of <I-1> to <I-6>, the method including:
   melt-mixing a composition raw material containing the PVA resin and the nickel compound.
<I-13> A method for producing the multilayer structure according to <I-9>, the method including:
   melt-molding a layer containing the resin composition.

The present disclosure will be described below with reference to embodiments for carrying out the first aspect. However, the present disclosure is not limited to the embodiments described below.

### Resin Composition

The resin composition according to an embodiment of the present disclosure (hereinafter referred to as "present resin composition (1)") contains a PVA resin and an alkaline earth metal compound and a specific trace amount of a nickel compound.

That is, in the present resin composition (1), the base resin is the PVA resin, and the content of the PVA resin in the present resin composition (1) is usually 70 mass% or more, preferably 80 mass% or more, more preferably 90 mass% or more, and still more preferably 95 mass% or more.

Hereinafter, the respective components will be described.

### PVA Resin

The PVA resin used in the present embodiment is an ethylene-modified PVA resin having an ethylene structural unit. The PVA resin is usually produced by copolymerizing a vinyl ester monomer with ethylene in the presence of a polymerization initiator, followed by saponification.

The content of the ethylene structural unit in the PVA resin is from 1 to 19 mol%, preferably from 2 to 15 mol%, and more preferably from 3 to 10 mol%. When the content of the ethylene structural unit is equal to or lower than the upper limit value, gas barrier properties tend to be enhanced. On the other hand, when the content of the ethylene structural unit is equal to or higher than the lower limit value, gas barrier properties under high humidity and melt-moldability tend to be enhanced.

The content of the ethylene structural unit in the PVA resin was determined from proton NMR of a polyvinyl ester containing an ethylene structural unit, which is a precursor of the PVA resin. That is, the produced polyvinyl ester was sufficiently reprecipitated and purified three times or more with n-hexane/acetone, and then dried under reduced pressure at 80°C for 3 days to prepare a polyvinyl ester for analysis. The polyvinyl ester was dissolved in DMSO-D and measured at 80°C using 500 MHz proton NMR (JEOL GX-500). The content of the ethylene structural unit can be calculated using signals (from 4.7 to 5.2 ppm) derived from the main chain methine of the vinyl ester and signals (from 0.8 to 1.6 ppm) derived from the main chain methylene of the ethylene, the vinyl ester, and the third component.

The degree of saponification of the PVA resin is usually from 90 to 99.99 mol%, preferably from 95 to 99.5 mol%, and more preferably from 97 to 99 mol%. When the degree of saponification is equal to or higher than the lower limit value, gas barrier properties, thermal stability, moisture resistance, and the like tend to be further enhanced. On the other hand, when the degree of saponification is equal to or lower than the upper limit value, the PVA resin tends to be less likely to be thermally degraded.

The degree of saponification of the PVA resin can be measured based on JIS K6726.

The melting point of the PVA resin is usually from 100 to 270°C, preferably from 120 to 250°C, and more preferably from 150 to 230°C. When the melting point is equal to or higher than the lower limit value, heat resistance tends to be enhanced. When the melting point is equal to or lower than the upper limit value, thermal degradation is less likely to occur.

Examples of the vinyl ester monomer include vinyl formate, vinyl acetate, vinyl propionate, vinyl valerate, vinyl caprate, vinyl laurate, vinyl stearate, vinyl benzoate, vinyl pivalate, and vinyl versatate. In particular, vinyl acetate is preferable from the viewpoint of producing a PVA resin. These may be used alone or in combination of two or more types. Furthermore, the PVA resin may be a copolymer of a vinyl ester monomer and ethylene and an additional monomer copolymerizable with the vinyl ester monomer and ethylene. As the additional monomer copolymerizable with the vinyl ester monomer and ethylene, a typically known monomer can be optionally used. The content of the structural unit derived from the additional copolymerizable monomer is usually preferably 15 mol% or less, more preferably 10 mol% or less, and still more preferably 5 mol% or less, relative to the PVA resin, and the structural unit derived from the additional copolymerizable monomer may not be contained.

Examples of the structural unit derived from the additional copolymerizable monomer include those having a primary hydroxyl group in a side chain. Preferred examples of the structural unit include a structural unit of General Formula (1) below. 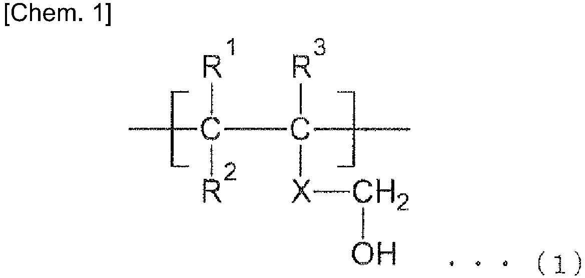 (In the formula, R¹ to R³ each independently represent a hydrogen atom or an organic group, and X represents a single bond or a bonding chain.)

R¹ to R³ are not particularly limited as long as R¹ to R³ are each a hydrogen atom or an organic group. Examples of the organic group described above include hydrocarbon groups, such as an alkyl group, an alkenyl group, an alkynyl group, a phenyl group, and a naphthyl group (these hydrocarbon groups may contain, for example, a hydroxyl group, fluorine, chlorine, and bromine as substituents).

X bonding the polymer main chain and the primary hydroxyl group structure represents a single bond or a bonding chain. The bonding chain is not particularly limited, and examples thereof include hydrocarbons such as alkylene, alkenylene, alkynylene, phenylene, and naphthylene (these hydrocarbons may contain, for example, a hydroxyl group, fluorine, chlorine, and bromine as substituents); hydrocarbons bonding to a polymer main chain by an ether bond, examples of hydrocarbons including oxyalkylene, oxyalkenylene, oxyalkynylene, oxyphenylene, and oxynaphthylene (these hydrocarbons may contain, for example, a hydroxyl group, fluorine, chlorine, and bromine as substituents), -CO-, -CO(CH₂)ₘCO-, -CO(CH₂)ₘCOR⁴-, -NR⁵-, and -CONR⁵-(R⁴ and R⁵ are each independently an optionally selected substituent, and preferably a hydrogen atom or an alkyl group; m represents a natural number).

To yield the PVA resin having a primary hydroxyl group in a side chain, the following methods are exemplified:
(I) a method in which a monomer having a primary hydroxyl group in a side chain and/or a monomer having a primary hydroxyl group in a side chain, the primary hydroxyl group being protected by an ester or the like, is copolymerized with ethylene and a vinyl ester monomer, followed by deprotection by saponification or the like; and
(II) a method in which a copolymer of ethylene and a vinyl ester monomer is saponified in advance to yield a PVA resin, and then the PVA resin is subjected to post-modification to introduce a primary hydroxyl group into a side chain. Among these, the method of (I) is preferable from the viewpoint of productivity.

Hereinafter, a method for producing the PVA resin of the present disclosure will be described.

First, when the method is the method of (I), ethylene and a vinyl ester monomer, and a monomer having a primary hydroxyl group in a side chain and/or a monomer having a hydroxyl group protected by an ester or the like as described above are only required to be copolymerized.

Examples of the monomer having a primary hydroxyl group in a side chain in the method of (I) include monohydroxy alkyl group-containing monomers, such as allyl alcohol, 3-buten-1-ol, 4-penten-1-ol, 5-hexen-1-ol, 6-hepten-1-ol, and methallyl alcohol; and dihydroxy alkyl group-containing monomers, such as 2-methylene-1,3-propane diol, 3,4-diol-1-butene, 4,5-diol-1-pentene, 4,5-diol-3-methyl-1-pentene, 5,6-diol-1-hexene, and glycerin monoallyl ether. These may be used singly or in combinations of two or more types thereof.

Examples of the monomer having a primary hydroxyl group in a side chain protected by an ester or the like (hereinafter may be referred to as "monomer having a hydroxyl group protected by an ester or the like") in the method of (I) include an acetic ester of the monomer having a primary hydroxyl group in a side chain described above. Specific examples thereof include monoacetoxy alkyl group-containing monomers, such as allyl acetate, 3-butenyl acetate, 4-pentenyl acetate, 5-hexenyl acetate, 6-heptenyl acetate, and methallyl acetate; and diacetoxyalkyl group-containing monomers, such as 2-methylene-1,3-propanediol diacetate, 3,4-diacetoxy-1-butene, 4,5-diacetoxy-1-pentene, 4,5-diacetoxy-3-methyl-1-pentene, 5,6-diacetoxy-1-hexene, and 3-allyloxy-1,2-propanediol diacetate. These may be used singly or in combinations of two or more types thereof.

In the method of (I) above, the copolymerization with ethylene and a vinyl ester monomer can be performed by using the monomer having a primary hydroxyl group in a side chain and the monomer having a hydroxyl group protected by an ester or the like in combination.

In particular, from the viewpoint of productivity, the monomer having a hydroxyl group protected by an ester or the like is preferable, a diacetoxyalkyl group-containing monomer is more preferable, 3,4-diacetoxy-1-butene and 2-methylene-1,3-propanediol diacetate are even more preferable, and 3,4-diacetoxy-1-butene is particularly preferable.

For example, when 3,4-diacetoxy-1-butene is used as a component of the copolymerization in the method of (I), the PVA resin obtained by the deprotection by saponification or the like preferably contains a primary hydroxyl group represented by General Formula (2) below in a side chain.

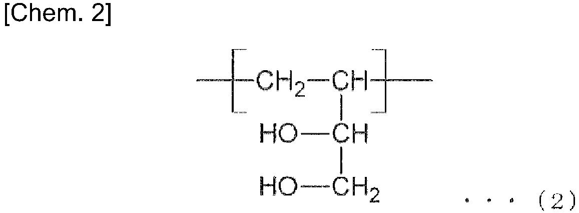

When 2-methylene-1,3-propanediol diacetate described above is used as a component of the copolymerization in the method of (I), for example, the obtained PVA resin preferably contains a primary hydroxyl group represented by General Formula (3) below in a side chain.

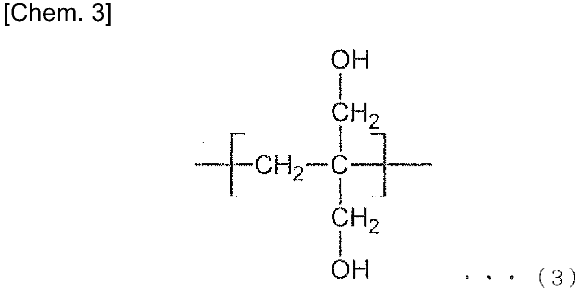

In the methods of (I) and (II) above, a copolymerizable ethylenic unsaturated monomer may be copolymerized as a component of the copolymerization in a range that does not impair the effects of the present disclosure.

Examples of the ethylenic unsaturated monomer include olefins, such as propylene, 1-butene, and isobutene; unsaturated acids or salts thereof or mono or dialkyl esters having from 1 to 18 carbons, such as acrylic acid, methacrylic acid, crotonic acid, phthalic acid (anhydride), maleic acid (anhydride), and itaconic acid (anhydride); acrylamide, N-alkylmethacrylamide having from 1 to 18 carbons, N,N-dimethylacrylamide, 2-acrylamidepropane sulfonic acid or a salt thereof; acrylamides, such as acrylamide propyl dimethylamine or an acid salts thereof or a quaternary salts thereof; methacrylamides, such as methacrylamide, N-alkylmethacrylamide having from 1 to 18 carbons, N,N-dimethylmethacrylamide, 2-methacrylamide propane sulfonic acid or a salt thereof; N-vinylamides, such as N-vinylpyrrolidone, N-vinylformamide, and N-vinylacetamide; vinyl cyanides, such as acrylonitrile and methacrylonitrile; vinyl ethers, such as alkyl vinyl ether having from 1 to 18 carbons, hydroxyalkyl vinyl ether, and alkoxyalkyl vinyl ether; halogenated vinyls, such as vinyl chloride, vinylidene chloride, vinyl fluoride, vinylidene fluoride, and vinyl bromide; and vinylsilanes. These may be used singly or in combinations of two or more types thereof.

As a polymerization method of copolymerizing ethylene and the vinyl ester monomer in the presence of a polymerization initiator, for example, a known polymerization method such as bulk polymerization, solution polymerization, suspension polymerization, or emulsion polymerization can be optionally used, but the copolymerization is usually performed by a bulk polymerization method or a solution polymerization method in which the polymerization is performed in the absence of a solvent or in a solvent such as an alcohol.

Examples of the alcohol used as the solvent in the solution polymerization include lower alcohols such as methanol, ethanol, and propanol. These may be used alone or in combination of two or more types.

Examples of the polymerization initiator include known initiators such as azo-based initiators or peroxide-based initiators, for example, 2,2'-azobisisobutyronitrile, 2,2'-azobis(2,4-dimethyl-valeronitrile), benzoyl peroxide, and n-propyl peroxydicarbonate. These may be used alone or in combination of two or more types. The polymerization reaction temperature is selected from a range of from 0 to 150°C.

The saponification can be carried out by a known method. The saponification is usually carried out by dissolving the produced copolymer in a saponification solvent in the presence of a saponification catalyst. Examples of the saponification solvent include lower alcohols such as methanol, methyl acetate, dimethyl sulfoxide, and dimethylformamide. These may be used alone or in combination of two or more types.

As the saponification catalyst, for example, an alkaline substance such as potassium hydroxide or sodium hydroxide can be used. These may be used alone or in combination of two or more types.

The PVA resin may be a crosslinked PVA resin or a non-crosslinked PVA resin.

In the case of a crosslinked PVA resin, usually, OH groups in the PVA resin function as reaction points, and the amount thereof decreases. However, in the case of a non-crosslinked PVA resin, OH groups sufficiently exist in the resin. As described below, because it is conceived that the OH groups in the resin contribute to the thermal stability, a non-crosslinked PVA resin having a large amount of OH groups is preferable.

When the PVA resin is crosslinked, there are known, for example, a method of dehydration-crosslinking in dry heat stretching by using an acid or a salt serving as a dehydration catalyst, and a method in which linking and crosslinking with another polymer is performed by using an acrylic acid-based polymer, an organic peroxide, an isocyanate compound, a urethane compound, an epoxy compound, or a dialdehyde. The non-crosslinked PVA resin in the present embodiment preferably uses a material not subjected to such a crosslinking reaction.

### Nickel Compound

Examples of the nickel compound used in the present embodiment include inorganic nickel compounds and organic nickel compounds. These may be used alone or in combination of two or more types. Among these, an inorganic nickel compound is preferable.

Examples of the inorganic nickel compound include nickel oxide, nickel hydroxide, and an inorganic salt of nickel.

Examples of nickel oxide include nickel(II) oxide, nickel(III) oxide, nickel(IV) oxide, and nickel dioxide.

Examples of nickel hydroxide include nickel(I) hydroxide and nickel(II) hydroxide.

Examples of the inorganic salt of nickel include nickel(II) chloride, nickel(II) phosphate, nickel(II) sulfate, and nickel nitrate.

In particular, from the viewpoint of readily achieving the effects of the disclosure, nickel oxide is preferable, and nickel(II) oxide is more preferable.

Examples of the organic nickel compound include nickel carboxylates, such as nickel acetate, nickel butyrate, and nickel stearate.

The molecular weight of the nickel compound is usually from 50 to 10000, preferably from 60 to 1000, and more preferably from 70 to 800, from the viewpoints of dispersibility and productivity of the resin composition (1).

From the viewpoints of economic efficiency and dispersibility, it is preferable that the nickel compound used in the present embodiment excludes a layered inorganic compound such as montmorillonite and a double salt such as hydrotalcite.

The nickel compound can be used in any form such as a solid form (for example, powder, fine powder, or flakes), a semi-solid form, a liquid form, a paste form, a solution form, or an emulsion form (aqueous dispersion). Among these, a powder form is preferable from the viewpoint of easy handling.

The content of the nickel compound in terms of metal is from 0.0001 to 2 ppm, preferably from 0.0001 ppm or greater and 1 ppm or less, more preferably 0.0001 ppm or greater and less than 0.5 ppm, even more preferably 0.001 ppm or greater and less than 0.5 ppm, and particularly preferably from 0.01 ppm or greater and less than 0.5 ppm, with respect to the mass of the resin composition (1).

The content of the nickel compound in terms of metal is the content of the nickel element.

When the content of the nickel compound in terms of metal is equal to or lower than the upper limit value, thermal decomposition of the resin composition (1) tends to be less likely to occur, and coloration tends to be less likely to occur. On the other hand, when the content is equal to or higher than the lower limit value, an effect of suppressing thermal degradation tends to be enhanced.

The content of the nickel compound in terms of metal in the resin composition (1) of the present embodiment can be determined by, for example, heating and ashing the resin composition (1) and subjecting the resulting product to an acid treatment with hydrochloric acid or the like to yield a solution, adding pure water to the solution to make up a fixed volume and yield a test liquid, and measuring the test liquid with an atomic absorption spectrophotometer.

### Alkaline Earth Metal Compound

Examples of the alkaline earth metal compound include salts, oxides, and hydroxides of alkaline earth metals and hydrates thereof. These may be used singly or in combinations of two or more types thereof. In particular, from the viewpoints of economic efficiency and dispersibility, alkaline earth metal salts and alkaline earth metal oxides are preferable, and alkaline earth metal salts are particularly preferable.

Examples of the alkaline earth metal salt include inorganic salts of alkaline earth metals, and carboxylates of alkaline earth metals.

Examples of the inorganic salt of the alkaline earth metal include a carbonate, a hydrogen carbonate, a phosphate, a borate, a sulfate, and a chloride of alkaline earth metals.

Examples of the carboxylate of alkaline earth metals include saturated or unsaturated carboxylates having from 2 to 25, preferably from 2 to 22, and more preferably from 6 to 20 carbons. Specific examples thereof include monovalent carboxylates such as acetate, butyrate, propionate, enanthate, caprate, laurate, palmitate, stearate, 12-hydroxystearate, behenate, and montanate, and divalent carboxylates such as oxalate, malonate, succinate, adipate, suberate, and sebacate. Among these, from the viewpoint of commercial availability, a linear saturated carboxylate is preferred, and a monovalent carboxylate is more preferred.

Examples of alkaline earth metal species of the alkaline earth metal compound include beryllium, magnesium, calcium, strontium, barium, and radium. Among them, from the viewpoint of commercial availability and economic efficiency, magnesium and calcium are preferred, and magnesium is particularly preferred.

In particular, as the alkaline earth metal compound, magnesium chloride is preferable, and a hydrate of magnesium chloride is more preferable. In addition, the alkaline earth metal compound preferably excludes a layered inorganic compound such as montmorillonite and a double salt such as hydrotalcite from the viewpoints of economic efficiency and dispersibility.

The alkaline earth metal compound can be used in any form such as a solid form (for example, powder, fine powder, or flakes), a semi-solid form, a liquid form, a paste form, a solution form, or an emulsion form (aqueous dispersion). The alkaline earth metal compound is preferably in the form of a powder, among these forms.

For the alkaline earth metal compound, one can be used alone, or two or more thereof can be used in combination. When a plurality of alkaline earth metal compounds are used, the content thereof is a total content of the plurality of alkaline earth metal compounds in terms of metal (mass).

The content of the alkaline earth metal compound in terms of metal is preferably from 0.0001 to 1 ppm, more preferably from 0.001 to 0.8 ppm, and even more preferably from 0.01 to 0.5 ppm, with respect to the mass of the resin composition (1).

The content of the alkaline earth metal compound in terms of metal is the content of the alkaline earth metal element.

When the content of the alkaline earth metal compound in terms of metal is equal to or lower than the upper limit value, the thermal stability tends to be enhanced, and when the content is equal to or higher than the lower limit value, the moldability of the resin composition (1) tends to be enhanced.

The content of the alkaline earth metal compound in terms of metal can be measured with an atomic absorption spectrophotometer, for example, using a test liquid prepared by, for example, heating and ashing the present resin composition (1) and subjecting the resulting product to an acid treatment with hydrochloric acid or the like to yield a solution, adding pure water to the solution to make up a fixed volume and yield a test liquid, and measuring the test liquid with an atomic absorption spectrophotometer.

The mass ratio of the content of the alkaline earth metal compound in terms of metal to the content of the nickel compound in terms of metal is preferably from 0.000005 to 10000, more preferably from 0.0005 to 5000, and even more preferably from 0.05 to 1000. When the mass ratio is equal to or lower than the upper limit value, the thermal stability tends to be enhanced, and when the mass ratio is equal to or higher than the lower limit value, coloration of the molded article tends to be capable of being suppressed.

Although the reason why an excellent effect is achieved by using the alkaline earth metal compound and the nickel compound used in the present embodiment in combination is not clear, it is presumed that an interaction product (for example, a complex) is formed by using the nickel compound and the alkaline earth metal compound in specific amounts in combination, the interaction product further interacts with oxygen of an OH group present in the PVA resin, and thus formation of a polyene structure is suppressed and the thermal stability is improved.

### Additional Thermoplastic Resin

The present resin composition (1) can contain a thermoplastic resin besides the ethylene-modified PVA resin within a range that does not impair the effects of the present disclosure (for example, usually 30 mass% or less, preferably 20 mass% or less, and more preferably 10 mass% or less, of the present resin composition (1), and the lower limit value thereof is usually 0 mass%).

As the additional thermoplastic resin, a known thermoplastic resin can be used. Examples thereof include a polyester-based resin, a polystyrene-based resin, a polyvinylchloride-based resin, a polycarbonate-based resin, an ionomer, polyvinylidene chloride, a polyester elastomer, a polyurethane elastomer, a chlorinated polyethylene, and a chlorinated polypropylene. These can be used alone or in combination of two or more types.

### Additional Compounding Agent

The present resin composition (1) may contain a compounding agent (however, excluding the nickel compound and the alkaline earth metal compound) that is generally blended in the ethylene-modified PVA resin within the range that does not impair the effects of the present disclosure (for example, usually 30 mass% or less, preferably 20 mass% or less, and more preferably 10 mass% or less, of the present resin composition (1), and the lower limit value thereof is usually 0 mass%). Examples of the compounding agent that may be blended include an inorganic double salt, a plasticizer (for example, aliphatic polyalcohols such as ethylene glycol, glycerin, and hexanediol), an oxygen absorber [for example, inorganic oxygen absorbers such as aluminum powder and potassium sulfite; ascorbic acid and fatty acid esters and metal salts thereof, polyhydric phenols such as gallic acid and hydroxyl group-containing phenolic aldehyde resins, a terpene compound, a blend of a tertiary hydrogen-containing resin and a transition metal other than nickel (for example, combination of polypropylene and cobalt), a blend of a carbon-carbon unsaturated bond-containing resin and a transition metal other than nickel (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as lubricants), an antimicrobial agent, an anti-blocking agent, and a filler (for example, an inorganic filler). One of these compounds may be used alone, or two or more thereof may be used in combination.

### Method for Producing Resin Composition (1)

The present resin composition (1) can be produced by mixing the ethylene-modified PVA resin, the nickel compound, and the alkaline earth metal compound by a known method, for example, a dry blending method, a melt-mixing method, a solution mixing method, or an impregnation method. In particular, the present resin composition (1) is preferably produced by a method including melt-mixing a resin composition (1) raw material containing the ethylene-modified PVA resin and the nickel compound. Furthermore, these production methods can be optionally combined.

Examples of the dry blending method include (i) a method of dry-blending a pellet-shaped ethylene-modified PVA resin, an alkaline earth metal compound and a nickel compound using a tumbler or the like.

Examples of the melt-mixing method include (ii) a method of dry-blending a pellet-shaped ethylene-modified PVA resin, an alkaline earth metal compound and a nickel compound and melt-kneading the resulting dry blend, and (iii) a method of adding an alkaline earth metal compound and a nickel compound to a molten ethylene-modified PVA resin and melt-kneading the resulting mixture.

Examples of the solution mixing method include (iv) a method of preparing a solution using a commercially available ethylene-modified PVA resin, blending an alkaline earth metal compound and a nickel compound in the prepared solution, subjecting the resulting blend to solidification molding, followed by solid-liquid separation with a known means, and drying the resulting product; and (v) a method of, in the process of producing an ethylene-modified PVA resin, incorporating an alkaline earth metal compound and a nickel compound in an ethylene-vinyl ester copolymer solution before saponification or a uniform solution of an ethylene-modified PVA resin (for example, water/alcohol solution), subjecting the resulting product to solidification molding, followed by solid-liquid separation with a known means, and drying the resulting product.

Examples of the impregnation method include (vi) a method of bringing a pellet-shaped ethylene-modified PVA resin into contact with an aqueous solution containing an alkaline earth metal compound and a nickel compound, incorporating the alkaline earth metal compound and the nickel compound in the ethylene-modified PVA resin, and then drying the ethylene-modified PVA resin.

As the aqueous solution containing a nickel compound, an aqueous solution of a nickel compound or an aqueous solution with a nickel ion eluted by immersing a nickel compound in water containing various chemicals can be used.

In the impregnation method, the contents of the alkaline earth metal compound and the nickel compound (in terms of metal) can be controlled by the concentrations of the alkaline earth metal compound and the nickel compound in the aqueous solution in which the ethylene-modified PVA resin is immersed, the immersion temperature, and the immersion time, for example.

The immersion time is usually from 0.5 to 48 hours, and preferably from 1 to 36 hours. The immersion temperature is usually from 10 to 40°C, and preferably from 20 to 35°C.

As the drying method in each of the above production methods, various drying methods can be employed, and either static drying or fluidized drying may be employed. These methods can be performed in combination.

As described above, in the present embodiment, the above-described different methods can be combined. In particular, from the viewpoint of productivity and producing a resin composition that exhibits more significant effects of the present disclosure, the melt-mixing method is preferable, and the method (ii) is particularly preferable. Also, when the additional thermoplastic resin and the additional compounding agent are used, the additional thermoplastic resin and the additional compounding agent may be blended by an ordinary manner according to the production method.

The present resin composition (1) produced by each of the production methods described above may be in any form. However, the present resin composition (1) is preferably in the form of pellets because the effects of the present disclosure are more readily achieved.

The pellets contain the present resin composition (1). The pellets preferably contain only the resin composition (1). The pellets may be in, for example, a spherical, oval, cylindrical, cubic, or rectangular parallelepiped shape, but are usually in an oval or cylindrical shape. From the viewpoint of convenience in the subsequent use as a molding material, when the pellets are oval in shape, the pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the diameter of the bottom surface is usually from 1 to 6 mm and preferably from 2 to 5 mm, and the length is usually from 1 to 6 mm and preferably from 2 to 5 mm.

The shape and the size of the pellet-shaped PVA resin used in each of the production methods are preferably the same.

The moisture content of the present resin composition (1) is usually from 0.01 to 0.5 mass%, preferably from 0.05 to 0.35 mass%, and more preferably from 0.1 to 0.3 mass%.

The moisture content of the present resin composition (1) is measured and calculated by the following method.

The mass (W₁) of the present resin composition (1) before drying is weighed with an electronic balance, the resin composition is dried in a hot air dryer at 150°C for 5 hours and then cooled in a desiccator for 30 minutes, and then the mass (W₂) after the cooling is weighed. The moisture content is calculated from the following equation: $Moisture content \left(mass%\right) = \left[\left({W}_{1}-{W}_{2}\right)/{W}_{1}\right] \times 100 .$

When the present resin composition (1) is in the form of pellets, preferably, a known lubricant is adhered to the surface of the pellets from the viewpoint of stabilizing the feed properties during melt-molding. Examples of the type of the lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone, or two or more thereof may be used in combination. The content of the lubricant is usually 5 mass% or less and preferably 1 mass% or less of the present resin composition (1). Note that the lower limit value is usually 0 mass%.

For the present resin composition (1) thus produced, the ratio ("1637" + "1638" + "1639")/("1621") of the sum of the color numbers "1637" (R: 104, G: 104, B: 88), "1638" (R: 104, G: 104, B: 104), and "1639" (R: 104, G: 104, B: 120) to the color number "1621" (R: 104, G: 88, B: 88) measured using a visual analyzer IRIS VA400 (available from Alpha MOS) is usually 0.8 or greater, preferably 0.85 or greater, and more preferably 0.9 or greater.

As the ratio is higher, the thermal stability tends to be further enhanced and coloration due to thermal degradation tends to be further suppressed.

The difference of 0.1 in the ratio results in a significant difference in yield in actual production. Thus, the difference is very large.

A yellow index (YI value) of the present resin composition (1) is usually 50 or less, preferably 45 or less, and more preferably 40 or less.

As the YI value is smaller, the thermal stability tends to be further enhanced and coloration due to thermal degradation tends to be further suppressed.

The YI value can be measured by a spectrocolorimeter (available from Nippon Denshoku Industries Co., Ltd.).

The present resin composition (1) thus produced is prepared into various forms such as a pellet form, a powder form, or a liquid form, and is provided as a molding material for various molded articles. In particular, in the present embodiment, in a case where the present resin composition is provided as a material for use in melt molding, the effects of the present disclosure tend to be more efficiently achieved, which is preferable.

The present resin composition (1) also contains a resin composition produced by mixing a resin other than the PVA resin used in the present resin composition (1).

Examples of the molded article include a single layer film molded from the present resin composition (1) and a multilayer structure having at least one layer composed of the present resin composition (1).

### Multilayer Structure

A multilayer structure according to an embodiment of the present disclosure (hereinafter referred to as "the present multilayer structure (1)") includes a layer containing the present resin composition (1) and preferably includes a layer composed only of the present resin composition (1). When the layer containing the present resin composition (1) (hereinafter referred to simply as "the present resin composition layer (1)") is laminated with another substrate containing, as a main component, a thermoplastic resin other than the present resin composition (1) (hereinafter, the resin used for the substrate may be abbreviated as "substrate resin"), strength can be further imparted, the present resin composition layer (1) can be protected from the influence of, for example, moisture, and another function can be imparted.

Examples of the substrate resin include polyolefin-based resins in a broad sense including polyethylene-based resins such as linear low-density polyethylene, low-density polyethylene, ultra-low-density polyethylene, medium-density polyethylene, high-density polyethylene, ethylene-propylene (block and random) copolymers, and ethylene-α-olefin (an α-olefin having from 4 to 20 carbons) copolymers; polypropylene-based resins such as polypropylene and propylene-α-olefin (an α-olefin having from 4 to 20 carbons) copolymers; (unmodified) polyolefin-based resins such as polybutene, polypentene, and polycyclic olefin-based resins (polymers having a cyclic olefin structure in a main chain and/or a side chain); and modified olefin resins such as unsaturated carboxylic acid-modified polyolefin-based resins obtained by graft-modifying these polyolefins with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more thereof may be used in combination.

Note that linear low-density polyethylene, low-density polyethylene, ultra-low-density polyethylene, medium-density polyethylene, and high-density polyethylene are each terms commonly used to represent a type of polyethylene.

In particular, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layer (1) is denoted by a (a1, a2, ...) and a substrate resin layer is denoted by b (b1, b2, ...), the layer configuration of the present multilayer structure (1) may be any combination thereof, such as a/b, b/a/b, a/b/a, a1/a2/b, a/b1/b2, b2/b1/a/b1/b2, or b2/b1/a/b1/a/b1/b2. When a recycled layer containing a mixture of the present resin composition (1) and the thermoplastic resin other than the present resin composition (1) is denoted by R, where the recycled layer is produced by remelt-molding, for example, an end portion and a defective product yielded in the process of producing the present multilayer structure (1), the layer configuration can also be b/R/a, b/R/a/b, b/R/a/R/b, b/a/R/a/b, or b/R/a/R/a/R/b, for example. The number of layers of the present multilayer structure (1) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxyl group-containing modified polyolefin-based polymers obtained by chemically bonding an unsaturated carboxylic acid or anhydride thereof to a polyolefin-based resin by an addition reaction or a graft reaction, for example. Examples of the carboxy group-containing modified polyolefin-based polymers described above include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. These may be used singly or in combinations of two or more types thereof.

In the present multilayer structure (1), in the case of using the adhesive resin layer between the present resin composition layer (1) and the substrate resin layer, the adhesive resin to be used preferably has excellent hydrophobicity because the adhesive resin layers are located on both sides of the present resin composition layer (1).

The aforementioned substrate resin and the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the subject matter of the present disclosure is not impeded (for example, 30 mass% or less, and preferably 10 mass% or less, with respect to the entire resin). These can be used alone or in combination of two or more types.

The lamination of the present resin composition layer (1) and the aforementioned substrate resin layer (including a case of interposing the adhesive resin layer therebetween) can be performed by a known method. Examples thereof include a method of melt-extrusion laminating the substrate resin to a film, a sheet, or the like of the present resin composition (1), a method of melt-extrusion laminating the present resin composition (1) to the substrate resin layer, a method of co-extruding the present resin composition (1) and the substrate resin, a method of dry laminating the present resin composition (1) (layer) and the substrate resin (layer) using a known adhesive such as an organic titanium compound, an isocyanate compound, a polyester compound, or a polyurethane compound, and a method of applying a solution of the present resin composition (1) onto the substrate resin and then removing the solvent. Among these, the production is preferably performed by a method including melt-molding a layer containing the present resin composition layer (1), and specifically by a co-extrusion method, from the viewpoints of cost and the environment.

The present multilayer structure (1) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretch ratio can be also employed among a roll stretching method, a tenter stretching method, a tubular stretching method, a stretch blowing method, and vacuum-pressure forming. The stretching temperature is a temperature near the melting point of the multilayer structure and is selected from a range of usually from about 40 to 170°C, preferably from about 60 to 160°C. When the stretching temperature is equal to or higher than the lower limit value, stretchability tends to be good. When the stretching temperature is equal to or lower than the upper limit value, stable stretched state tends to be maintained.

The present multilayer structure (1) after the stretching treatment may be subjected to heat setting for the purpose of imparting dimensional stability. The heat setting can be carried out by a well-known means; for example, the stretch-treated present multilayer structure (1) is heat-treated usually at a temperature of from 80 to 180°C and preferably at a temperature of from 100 to 165°C usually for about from 2 to 600 seconds while the stretch-treated present multilayer structure (1) is kept in a state of tension.

When the stretch-treated present multilayer structure (1) is used as a shrink film, in order to impart heat shrinkability, the stretch-treated present multilayer structure is not subjected to the heat setting described above, but may be subjected to a treatment such as cool-setting by application of cool air to the present multilayer structure (1) after the stretching treatment.

The thickness of the present multilayer structure (1) (including the stretched multilayer structure), and the thicknesses of the present resin composition layer (1), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (1) (including the stretched multilayer structure) is usually from 10 to 5000 µm, preferably from 30 to 3000 µm, and more preferably from 50 to 2000 µm. The thickness of the present resin composition layer (1) is usually from 1 to 500 µm, preferably from 3 to 300 µm, and more preferably from 5 to 200 µm, the thickness of the substrate resin layer is usually from 5 to 3000 µm, preferably from 10 to 2000 µm, and more preferably from 20 to 1000 µm, and the thickness of the adhesive resin layer is usually from 0.5 to 250 µm, preferably from 1 to 150 µm, and more preferably from 3 to 100 µm.

Furthermore, the ratio of the thickness of the present resin composition layer (1) to the thickness of the substrate resin layer ((the present resin composition layer (1))/(substrate resin layer)) in the present multilayer structure (1) is usually from 1/99 to 50/50, preferably from 5/95 to 45/55, and more preferably from 10/90 to 40/60, with the proviso that, when at least one type of the layers has a plurality of layers, the ratio is based on the thickness of the thickest corresponding layer. The thickness ratio of the present resin composition layer (1) to the adhesive resin layer (the present resin composition layer (1)/the adhesive resin layer) in the present multilayer structure (1) is usually from 10/90 to 99/1, preferably from 20/80 to 95/5, and more preferably from 50/50 to 90/10, with the proviso that, when at least one type of the layers has a plurality of layers, the ratio is based on the thickness of the thickest corresponding layer.

It is also possible to produce a cup- or tray-shaped molded body or food package using the present multilayer structure (1). In such a case, a draw forming method is usually employed, and specific examples thereof include a vacuum forming method, a pressure forming method, a vacuum-pressure forming method, and a plug-assisted vacuum-pressure forming method. Furthermore, in the case of producing a tube- or bottle-shaped multilayer container (laminate structure) from a multilayer parison (a hollow tubular pre-molded body before blowing), a blow molding method is employed. Specific examples thereof include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to heat treatment, cooling treatment, rolling, printing, dry lamination, solution or melt coating, bag-making, deep drawing, box processing, tube processing, and splitting, for example.

A single layer film molded from the present resin composition (1) or a container or lid material composed of the present multilayer structure (1), such as a bag, a cup, a tray, a tube, or a bottle is useful for various packaging materials and containers for general foods, seasonings such as mayonnaise and dressing, fermented foods such as miso, oil and fat foods such as salad oil, beverages, cosmetics, and pharmaceuticals, for example.

### Second Aspect

The second aspect includes the following aspects <II-1> to <II-12>.
<II-1> A resin composition containing a PVA resin, a nickel compound, and acetic acid and/or a salt thereof other than an alkaline earth metal compound,
   the PVA resin being an ethylene-modified PVA resin containing from 1 to 19 mol% of an ethylene structural unit, and
   a content of the nickel compound in terms of metal being from 0.0001 to 2 ppm with respect to a mass of the resin composition.
<II-2> The resin composition according to <II-1>, wherein a content of the acetic acid and/or the salt thereof is from 10 to 10000 ppm with respect to the mass of the resin composition.
<II-3> The resin composition according to <II-1> or <II-2>, wherein the content of the nickel compound in terms of metal is 0.0001 ppm or greater and less than 0.5 ppm with respect to the mass of the resin composition.
<II-4> The resin composition according to any one of <II-1> to <II-3>, wherein a mass ratio of the content of the acetic acid and/or the salt thereof to the content of the nickel compound is from 5 to 100000000.
<II-5> The resin composition according to any one of <II-1> to <II-4>, wherein the PVA resin is non-crosslinked.
<II-6> A molding material containing the resin composition according to any one of <II-1> to <II-5>.
<II-7> The molding material according to <II-6>, wherein the molding material is in a pellet form.
<II-8> A multilayer structure including a layer containing the resin composition according to any one of <II-1> to <II-5>.
<II-9> A molded body including the multilayer structure according to <II-8>.
<II-10> A food package including the multilayer structure according to <II-8>.
<II-11> A method for producing the resin composition according to any one of <II-1> to <II-5>, the method including:
   melt-mixing a composition raw material containing the PVA resin and the nickel compound.
<II-12> A method for producing the multilayer structure according to <II-8>, the method including:
   melt-molding a layer containing the resin composition.

The present disclosure will be described below with reference to embodiments for carrying out the second aspect. However, the present disclosure is not limited to the embodiments described below.

### Resin Composition

The resin composition according to an embodiment of the present disclosure (hereinafter referred to as "present resin composition (2)") contains a PVA resin, and acetic acid and/or a salt thereof other than an alkaline earth metal compound and a specific trace amount of a nickel compound.

That is, in the present resin composition (2), the base resin is the PVA resin, and the content of the PVA resin in the present resin composition (2) is usually 70 mass% or more, preferably 80 mass% or more, more preferably 90 mass% or more, and still more preferably 95 mass% or more.

Hereinafter, the respective components will be described.

### PVA Resin

The PVA resin used in the present embodiment is an ethylene-modified PVA resin having an ethylene structural unit. The PVA resin is usually produced by copolymerizing a vinyl ester monomer and ethylene in the presence of a polymerization initiator, followed by saponification, and the same PVA resin as that according to the first aspect can be used.

### Nickel Compound

As the nickel compound used in the present embodiment, the same nickel compound as that according to the first aspect can be used. Examples thereof include an inorganic nickel compound and an organic nickel compound. These may be used alone or in combination of two or more types. In particular, an inorganic nickel compound is preferable.

The content of the nickel compound in terms of metal is from 0.0001 to 2 ppm, preferably from 0.0001 ppm or greater and 1 ppm or less, more preferably 0.0001 ppm or greater and less than 0.5 ppm, even more preferably 0.001 ppm or greater and less than 0.5 ppm, and particularly preferably from 0.001 ppm or greater and less than 0.5 ppm, with respect to the mass of the resin composition (2).

The content of the nickel compound in terms of metal is the content of the nickel element.

When the content of the nickel compound in terms of metal is equal to or lower than the upper limit value, thermal decomposition of the resin composition (2) tends to be less likely to occur, and coloration tends to be less likely to occur. When the content is equal to or higher than the lower limit value, an effect of suppressing thermal degradation tends to be enhanced.

The content of the nickel compound in terms of metal in the resin composition (2) of the present embodiment can be determined by, for example, heating and ashing the resin composition (2) and subjecting the resulting product to an acid treatment with hydrochloric acid or the like to yield a solution, adding pure water to the solution to make up a fixed volume and yield a test liquid, and measuring the test liquid with an atomic absorption spectrophotometer.

### Acetic Acid and/or Salt Thereof

The acetic acid and/or the salt thereof used in the present embodiment is acetic acid and/or a salt thereof other than the alkaline earth metal compound according to the first aspect described above. Specific examples thereof include acetic acid, sodium acetate, potassium acetate, manganese acetate, copper acetate, cobalt acetate, and zinc acetate. These can be used alone or in combination of two or more types thereof. Among these, acetic acid, sodium acetate, and potassium acetate are preferable, acetic acid, sodium acetate, and potassium acetate are more preferable, acetic acid and sodium acetate are even more preferable, and acetic acid is particularly preferable.

The content of the acetic acid and/or the salt thereof is usually from 10 to 10000 ppm, preferably from 100 to 999 ppm, more preferably from 200 to 700 ppm, and even more preferably from 300 to 600 ppm, with respect to the mass of the resin composition (2). When the content is equal to or lower than the upper limit value, the thermal stability tends to be enhanced, and when the content is equal to or higher than the lower limit value, the moldability of the resin composition (2) tends to be enhanced.

The content of the acetic acid and/or the salt thereof can be measured by a known analytical method. For example, the content can be measured by liquid chromatography mass spectrometry (LC/MS) or gas chromatography mass spectrometry (GC/MS), for example.

The mass ratio of the content of the acetic acid and/or the salt thereof to the content of the nickel compound is usually from 5 to 100000000, preferably from 10 to 1000000, and more preferably from 100 to 10000. When the mass ratio is equal to or lower than the upper limit value, the thermal stability tends to be enhanced, and when the mass ratio is equal to or higher than the lower limit value, the moldability of the resin composition (2) tends to be enhanced.

Although the reason why an excellent effect is achieved by blending the nickel compound and the acetic acid and/or the salt thereof in appropriate amounts is not clear, it is presumed that combined use of the nickel compound and the acetic acid and/or the salt thereof in specific amounts moderately lowers the pH and strengthens the hydrogen bond in a hydroxy group of the PVA resin, and thus the thermal stability is improved.

### Additional Thermoplastic Resin

The present resin composition (2) can contain a thermoplastic resin besides the ethylene-modified PVA resin within a range that does not impair the effects of the present disclosure (for example, usually 30 mass% or less, preferably 20 mass% or less, and more preferably 10 mass% or less, of the present resin composition (2), and the lower limit value thereof is usually 0 mass%).

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. These can be used alone or in combination of two or more types.

### Additional Compounding Agent

Also, the present resin composition (2) may contain a compounding agent (however, excluding the nickel compound and the acetic acid and/or the salt thereof) that is generally blended in the ethylene-modified PVA resin within the range that does not impair the effects of the present disclosure (for example, usually 30 mass% or less, preferably 20 mass% or less, and more preferably 10 mass% or less of the present resin composition (2), and the lower limit value thereof is usually 0 mass%). Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blend of a tertiary hydrogen-containing resin and a transition metal other than nickel (for example, combination of polypropylene and cobalt), a blend of a carbon-carbon unsaturated bond-containing resin and a transition metal other than nickel (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone, or two or more thereof may be used in combination.

### Method for Producing Resin Composition (2)

The present resin composition (2) can be produced by mixing the ethylene-modified PVA resin, the nickel compound, and the acetic acid and/or the salt thereof by a known method, for example, a dry blending method, a melt-mixing method, a solution mixing method, or an impregnation method. Among these methods, the present resin composition (2) is preferably produced by a method including melt-mixing a composition raw material containing the ethylene-modified PVA resin and the nickel compound. Furthermore, these production methods can be optionally combined.

Examples of the dry blending method include (i) a method of dry-blending a pellet-shaped ethylene-modified PVA resin, a nickel compound, and acetic acid and/or a salt thereof using, for example, a tumbler.

Examples of the melt-mixing method include (ii) a method of dry-blending a pellet-shaped ethylene-modified PVA resin, a nickel compound, and acetic acid and/or a salt thereof and melt-kneading the resulting dry blend, and (iii) a method of adding a nickel compound and acetic acid and/or a salt thereof to a molten ethylene-modified PVA resin and melt-kneading the resulting mixture.

Examples of the solution mixing method include (iv) a method of preparing a solution using a commercially available ethylene-modified PVA resin, blending a nickel compound and acetic acid and/or a salt thereof in the prepared solution, subjecting the resulting blend to solidification molding, followed by solid-liquid separation with a known means, and drying the resulting product; and (v) a method of, in the process of producing a PVA resin, incorporating a nickel compound and acetic acid and/or a salt thereof in an ethylene-vinyl ester copolymer solution before saponification or a uniform solution of an ethylene-modified PVA resin (for example, water/alcohol solution), subjecting the resulting product to solidification molding, followed by solid-liquid separation with a known means, and drying the resulting product.

Examples of the impregnation method include (vi) a method of bringing a pellet-shaped ethylene-modified PVA resin into contact with an aqueous solution containing a nickel compound and acetic acid and/or a salt thereof, incorporating the nickel compound and the acetic acid and/or the salt thereof in the ethylene-modified PVA resin, and then drying the ethylene-modified PVA resin.

As the aqueous solution containing a nickel compound, an aqueous solution of a nickel compound or an aqueous solution with a nickel ion eluted by immersing a nickel compound in water containing various chemicals can be used.

In the impregnation method, the contents of the nickel compound and the acetic acid and/or the salt thereof (in terms of metal) can be controlled by the concentrations of the nickel compound and the acetic acid and/or the salt thereof in the aqueous solution in which the ethylene-modified PVA resin is immersed, the immersion temperature, and the immersion time, for example.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above-described different methods can be combined. In particular, a melt-mixing method is preferable, and the method (ii) is particularly preferable, from the viewpoints of productivity and producing the resin composition (2) that exhibits more significant effects of the present disclosure. Also, when the additional thermoplastic resin and the additional compounding agent are used, the additional thermoplastic resin and the additional compounding agent may be blended by an ordinary manner according to the production method.

The present resin composition (2) produced by each of the production methods described above may be in any form, but is preferably in the form of pellets because the effects of the present disclosure are more readily achieved.

The pellets contain the present resin composition (2). The pellets are preferably pellets containing only the resin composition (2). The pellets may be in, for example, a spherical, oval, cylindrical, cubic, or rectangular parallelepiped shape, but are usually in an oval or cylindrical shape. From the viewpoint of convenience in the subsequent use as a molding material, when the pellets are oval in shape, the pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and the size of the pellet-shaped PVA resin used in each of the production methods are preferably the same.

The moisture content of the present resin composition (2) is usually from 0.01 to 0.5 mass%, preferably from 0.05 to 0.35 mass%, and more preferably from 0.1 to 0.3 mass%.

The moisture content of the present resin composition (2) is measured and calculated by the following method.

The mass (W₁) of the present resin composition (2) before drying is weighed with an electronic balance, the resin composition is dried in a hot air dryer at 150°C for 5 hours and then cooled in a desiccator for 30 minutes, and then the mass (W₂) after the cooling is weighed. The moisture content is calculated from the following equation: $Moisture content \left(mass%\right) = \left[\left({W}_{1}-{W}_{2}\right)/{W}_{1}\right] \times 100 .$

When the present resin composition (2) is in the form of pellets, preferably, a known lubricant is adhered to the surface of the pellets from the viewpoint of stabilizing the feed properties during melt-molding. Examples of the type of the lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone, or two or more thereof may be used in combination. The content of the lubricant is usually 5 mass% or less and preferably 1 mass% or less of the present resin composition (2). Note that the lower limit value thereof is usually 0 mass%.

The ratio ("2183" + "2184" + "2185")/("1604" + "1605") of the sum of the color numbers "2183" (R: 136, G: 136, B: 120), "2184" (R: 136, G: 136, B: 136), and "2185" (R: 136, G: 136, B: 152) to the sum of the color numbers "1604" (R: 104, G: 72, B: 72) and "1605" (R: 104, G: 72, B: 88) measured using a visual analyzer IRIS VA400 (available from Alpha MOS) of the present resin composition (2) thus produced is usually 5.8 or greater, preferably 6 or greater, and more preferably 6.2 or greater.

As the ratio is higher, the thermal stability tends to be further enhanced and coloration due to thermal degradation tends to be further suppressed.

The difference of 0.1 in the ratio results in a significant difference in yield in actual production. Thus, the difference is very large.

A yellow index (YI value) of the present resin composition (2) is usually 50 or less, preferably 45 or less, and more preferably 40 or less.

As the YI value is smaller, the thermal stability tends to be further enhanced and coloration due to thermal degradation tends to be further suppressed.

The YI value can be measured by a spectrocolorimeter (available from Nippon Denshoku Industries Co., Ltd.).

The present resin composition (2) thus produced is prepared into various forms such as a pellet form, a powder form, or a liquid form, and is provided as a molding material for various molded articles. In particular, in the present embodiment, in a case where the present resin composition is provided as a material for use in melt molding, the effects of the present disclosure tend to be more efficiently achieved, which is preferable.

The present resin composition (2) also includes a resin composition produced by mixing a resin other than the PVA resin used in the present resin composition (2).

Examples of the molded article include a single layer film molded from the present resin composition (2) and a multilayer structure having at least one layer composed of the present resin composition (2).

### Multilayer Structure

A multilayer structure according to an embodiment of the present disclosure (hereinafter referred to as "the present multilayer structure (2)") includes a layer containing the present resin composition (2) and preferably includes a layer composed only of the present resin composition (2). When the layer containing the present resin composition (2) (hereinafter referred to simply as "the present resin composition layer (2)") is laminated with another substrate containing, as a main component, a thermoplastic resin other than the present resin composition (2) (hereinafter, the resin used for the substrate may be abbreviated as "substrate resin"), strength can be further imparted, the present resin composition layer (2) can be protected from the influence of, for example moisture, and another function can be imparted.

Examples of the substrate resin include polyolefin-based resins in a broad sense including polyethylene-based resins such as linear low-density polyethylene, low-density polyethylene, ultra-low-density polyethylene, medium-density polyethylene, high-density polyethylene, ethylene-propylene (block and random) copolymers, and ethylene-α-olefin (an α-olefin having from 4 to 20 carbons) copolymers; polypropylene-based resins such as polypropylene and propylene-α-olefin (an α-olefin having from 4 to 20 carbons) copolymers; (unmodified) polyolefin-based resins such as polybutene, polypentene, and polycyclic olefin-based resins (polymers having a cyclic olefin structure in a main chain and/or a side chain); and modified olefin resins such as unsaturated carboxylic acid-modified polyolefin-based resins obtained by graft-modifying these polyolefins with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more thereof may be used in combination.

Note that linear low-density polyethylene, low-density polyethylene, ultra-low-density polyethylene, medium-density polyethylene, and high-density polyethylene are each terms commonly used to represent a type of polyethylene.

In particular, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layer (2) is denoted by a (a1, a2, ...) and a substrate resin layer is denoted by b (b1, b2, ...), the layer configuration of the present multilayer structure (2) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present resin composition (2) and the thermoplastic resin other than the present resin composition (2) is denoted by R, where the recycled layer is produced by remelt-molding, for example, an end portion and a defective product yielded in the process of producing the present multilayer structure (2), the layer configuration can also be b/R/a, b/R/a/b, b/R/a/R/b, b/a/R/a/b, or b/R/a/R/a/R/b, for example. The number of layers of the present multilayer structure (2) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxyl group-containing modified polyolefin-based polymers obtained by chemically bonding an unsaturated carboxylic acid or anhydride thereof to a polyolefin-based resin by an addition reaction or a graft reaction, for example. Examples of the carboxy group-containing modified polyolefin-based polymers described above include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. These may be used singly or in combinations of two or more types thereof.

In the present multilayer structure (2), in the case of using the adhesive resin layer between the present resin composition layer (2) and the substrate resin layer, the adhesive resin to be used preferably has excellent hydrophobicity because the adhesive resin layers are located on both sides of the present resin composition layer (2).

The aforementioned substrate resin or adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the subject matter of the present disclosure is not impeded (for example, 30 mass% or less, and preferably 10 mass% or less, with respect to the entire resin). These can be used alone or in combination of two or more types.

The lamination of the present resin composition layer (2) and the aforementioned substrate resin layer (including a case of interposing the adhesive resin layer therebetween) can be performed by a known method. Examples thereof include a method of melt-extrusion laminating the substrate resin to a film, a sheet, or the like of the present resin composition (2), a method of melt-extrusion laminating the present resin composition (2) to the substrate resin layer, a method of co-extruding the present resin composition (2) and the substrate resin, a method of dry laminating the present resin composition (2) (layer) and the substrate resin (layer) using a known adhesive such as an organic titanium compound, an isocyanate compound, a polyester compound, or a polyurethane compound, and a method of applying a solution of the present resin composition (2) onto the substrate resin and then removing the solvent. Among these, the production is preferably performed by a method including melt-molding a layer containing the present resin composition layer (2), and specifically by a co-extrusion method, from the viewpoints of cost and the environment.

The present multilayer structure (2) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretch ratio can be also employed among a roll stretching method, a tenter stretching method, a tubular stretching method, a stretch blowing method, and vacuum-pressure forming. The stretching temperature is a temperature near the melting point of the multilayer structure and is selected from a range of usually from about 40 to 170°C, preferably from about 60 to 160°C. When the stretching temperature is equal to or higher than the lower limit value, stretchability tends to be good. When the stretching temperature is equal to or lower than the upper limit value, stable stretched state tends to be maintained.

The present multilayer structure (2) after the stretching treatment may be subjected to heat setting for the purpose of imparting dimensional stability. The heat setting can be carried out by a well-known means; for example, the stretch-treated present multilayer structure (2) is heat-treated usually at a temperature of from 80 to 180°C and preferably at a temperature of from 100 to 165°C usually for about from 2 to 600 seconds while the stretch-treated present multilayer structure (2) is kept in a state of tension.

When the stretch-treated present multilayer structure (2) is used as a shrink film, in order to impart heat shrinkability, the stretch-treated present multilayer structure (2) is not subjected to the heat setting described above, but may be subjected to a treatment such as cool-setting by application of cool air to the present multilayer structure (2) after the stretching treatment.

The thickness of the present multilayer structure (2) (including the stretched multilayer structure), and the thicknesses of the present resin composition layer (2), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (2) (including the stretched multilayer structure) is usually from 10 to 5000 µm, preferably from 30 to 3000 µm, and more preferably from 50 to 2000 µm. The thickness of the present resin composition layer (2) is usually from 1 to 500 µm, preferably from 3 to 300 µm, and more preferably from 5 to 200 µm. The thickness of the substrate resin layer is usually from 5 to 3000 µm, preferably from 10 to 2000 µm, and more preferably from 20 to 1000 µm. The thickness of the adhesive resin layer is usually from 0.5 to 250 µm, preferably from 1 to 150 µm, and more preferably from 3 to 100 µm.

Furthermore, the ratio of the thickness of the present resin composition layer (2) to the thickness of the substrate resin layer ((the present resin composition layer (2))/(substrate resin layer)) in the present multilayer structure (2) is usually from 1/99 to 50/50, preferably from 5/95 to 45/55, and more preferably from 10/90 to 40/60, with the proviso that, when at least one type of the layers has a plurality of layers, the ratio is based on the thickness of the thickest corresponding layer. The thickness ratio of the present resin composition layer (2) to the adhesive resin layer (the present resin composition layer (2)/the adhesive resin layer) in the present multilayer structure (2) is usually from 10/90 to 99/1, preferably from 20/80 to 95/5, and more preferably from 50/50 to 90/10, with the proviso that, when at least one type of the layers has a plurality of layers, the ratio is based on the thickness of the thickest corresponding layer.

It is also possible to produce a cup- or tray-shaped molded body or food package using the present multilayer structure (2). In such a case, a draw forming method is usually employed, and specific examples thereof include a vacuum forming method, a pressure forming method, a vacuum-pressure forming method, and a plug-assisted vacuum-pressure forming method. Furthermore, in the case of producing a tube- or bottle-shaped multilayer container (laminate structure) from a multilayer parison (a hollow tubular pre-molded body before blowing), a blow molding method is employed. Specific examples thereof include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to heat treatment, cooling treatment, rolling, printing, dry lamination, solution or melt coating, bag-making, deep drawing, box processing, tube processing, and splitting, for example.

A single layer film molded from the present resin composition (2) or a container or lid material composed of the present multilayer structure (2), such as a bag, a cup, a tray, a tube, or a bottle is useful for various packaging materials and containers for general foods, seasonings such as mayonnaise and dressing, fermented foods such as miso, oil- and fat foods such as salad oil, beverages, cosmetics, and pharmaceuticals, for example.

### Examples

Hereinafter, the present disclosure will be more specifically described with reference to Examples, but as long as a departure from the gist of the present disclosure does not occur, the present disclosure is not limited to Examples below. In Examples, "parts" and "%" are based on mass.

### First Aspect

Prior to Examples, the following components were prepared.
- Ethylene-modified PVA resin: pellets of a PVA resin (non-crosslinked) having an ethylene structural unit content of 7.4 mol%, a melting point of 213°C, and a degree of saponification of 98 mol%
- Unmodified PVA resin: pellets of the PVA resin (non-crosslinked) having an ethylene structural unit content of 0 mol%, a melting point of 226°C, and a degree of saponification of 99 mol%
- Alkaline earth metal compound: magnesium chloride hexahydrate (available from FUJIFILM Wako Pure Chemical Corporation)
- Nickel compound: nickel(II) oxide (available from FUJIFILM Wako Pure Chemical Corporation)

### Example I-1

The pellets of the ethylene-modified PVA resin were dry-blended with the magnesium chloride hexahydrate in an amount of 0.1 ppm as a content in terms of metal with respect to the mass of a resin composition to be obtained and the nickel oxide in an amount of 0.001 ppm as a content in terms of metal with respect to the mass of the resin composition, to prepare a mixture. Then, the mixture was fed to a twin-screw extruder (20 mmφ) having a die with two holes and extruded under the following extrusion conditions. The discharged strand was cooled by air cooling and solidified. Next, the solidified strand was cut by a pelletizer to produce pellets of a resin composition.

### Extrusion Condition

Set temperature (°C) of extruder: C1/C2/C3/C4/C5/C6 were 200/210/225/225/225/225

### Example I-2

Pellets of a resin composition were produced in the same manner as in Example I-1, except that the content of the nickel oxide in terms of metal was changed to 0.1 ppm with respect to the mass of the resin composition.

### Example I-3

Pellets of a resin composition were produced in the same manner as in Example I-1, except that the content of the nickel oxide in terms of metal was changed to 1.0 ppm with respect to the mass of the resin composition.

### Comparative Example I-1

Pellets of a resin composition were produced in the same manner as in Example I-1, except that no nickel oxide was used.

### Comparative Example I-2

Pellets of a resin composition were produced in the same manner as in Example I-1, except that the content of the nickel oxide in terms of metal was changed to 10 ppm with respect to the mass of the resin composition.

### Comparative Example I-3

Pellets of a resin composition were produced in the same manner as in Example I-1, except that the content of the nickel oxide in terms of metal was changed to 1.0 ppm with respect to the mass of the resin composition and no magnesium chloride hexahydrate was used.

### Comparative Example I-4

Pellets of a resin composition were produced in the same manner as in Example I-1, except that the unmodified PVA resin was used in place of the ethylene-modified PVA resin and the content of the nickel oxide in terms of metal was changed to 0.1 ppm with respect to the mass of the resin composition.

The resulting pellets of the resin compositions in Examples I-1 to I-3 and Comparative Examples I-1 to I-4 were used to evaluate the thermal stability as follows. The results are presented in Table I-1 below.

### Evaluation of Coloration due to Thermal Degradation

Using the pellets of each of the resin compositions obtained in Examples I-1 to I-3 and Comparative Examples I-1 to I-4 as a sample and using a visual analyzer IRIS VA400 (available from Alpha MOS), the ratio ("1637" + "1638" + "1639")/("1621") of the sum of the color numbers "1637" (R: 104, G: 104, B: 88), "1638" (R: 104, G: 104, B: 104), and "1639" (R: 104, G: 104, B: 120) to the color number "1621" (R: 104, G: 88, B: 88) was evaluated.

The color number "1621" is color with deep yellow, and the color numbers "1637", "1638", and "1639" are color with pale yellow. A larger value of this ratio indicates better thermal stability and more effectively suppressed coloration of a sample.

### YI Value

A crushed material of the resulting pellets of each of the resin compositions of Examples I-1 to I-3 and Comparative Example I-4 was filled in a cylinder having an internal diameter of 32 mm and a height of 30 mm and the excess was struck off, and the filled material was subjected to yellow index (YI value) measurement by using a spectrocolorimeter (available from Nippon Denshoku Industries Co., Ltd.).

A larger value means that the resin composition is more yellow-colored after the heating and that thermal stability is poorer.

**Table I-1**

| | Type of PVA resin | Content of nickel compound in terms of metal (ppm) | Content of alkaline earth metal compound in terms of metal (ppm) | Thermal Stability Evaluation | |
|---|---|---|---|---|---|
| | | | | Evaluation of coloration due to thermal degradation | YI value |
| Example I-1 | Ethylene-modified PVA resin | 0.001 | 0.1 | 0.86 | 34 |
| Example I-2 | Ethylene-modified PVA resin | 0.1 | 0.1 | 0.98 | 32 |
| Example I-3 | Ethylene-modified PVA resin | 1.0 | 0.1 | 0.95 | 33 |
| Comparative Example I-1 | Ethylene-modified PVA resin | 0 | 0.1 | 0.36 | - |
| Comparative Example I-2 | Ethylene-modified PVA resin | 10 | 0.1 | 0.27 | - |
| Comparative Example I-3 | Ethylene-modified PVA resin | 1.0 | 0 | 0.68 | - |
| Comparative Example I-4 | Unmodified PVA resin | 0.1 | 0.1 | 0.1 | 92 |

| | | | | | |
|---|---|---|---|---|---|
| * "-" represents that no measurement was performed. | | | | | |

As shown in Table I-1, the resin compositions of Examples I-1 to I-3, each containing the alkaline earth metal compound and a specific amount of the nickel compound incorporated in the ethylene-modified PVA resin, had excellent thermal stability and suppressed coloration due to thermal degradation compared to those of the resin composition of Comparative Example I-1, which did not contain the nickel compound, the resin composition of Comparative Example I-2, which contained the nickel compound in an amount larger than the specific range, the resin composition of Comparative Example I-3, which did not contain the alkaline earth metal compound, and the resin composition of Comparative Example I-4, which used the unmodified PVA resin.

Multilayer structures, molded bodies, and food packages each having a layer containing each of the resin compositions of Examples I-1 to I-3 also have excellent thermal stability and suppress coloration due to thermal degradation.

### Second Aspect

Prior to Examples, the following components were prepared.
- Ethylene-modified PVA resin: pellets of a PVA resin (non-crosslinked) having an ethylene structural unit content of 7.4 mol%, a melting point of 213°C, and a degree of saponification of 98 mol%
- Unmodified PVA resin: pellets of the PVA resin (non-crosslinked) having an ethylene structural unit content of 0 mol%, a melting point of 226°C, and a degree of saponification of 99 mol%
- Acetic acid and/or salt thereof: acetic acid (available from FUJIFILM Wako Pure Chemical Corporation)
- Nickel compound: nickel(II) oxide (available from FUJIFILM Wako Pure Chemical Corporation)

### Example II-1

The pellets of the ethylene-modified PVA resin were dry-blended with the acetic acid in an amount of 500 ppm with respect to the mass of a resin composition to be obtained and the nickel oxide in an amount of 0.001 ppm as a content in terms of metal with respect to the mass of the PVA resin, to prepare a mixture. Then, the mixture was fed to a twin-screw extruder (20 mmφ) having a die with two holes and extruded under the following extrusion conditions. The discharged strand was cooled by air cooling and solidified. Next, the solidified strand was cut by a pelletizer to produce pellets of a resin composition.

### Extrusion Condition

Set temperature (°C) of extruder: C1/C2/C3/C4/C5/C6 were 200/210/225/225/225/225

### Example II-2

Pellets of a resin composition were produced in the same manner as in Example II-1, except that the content of the nickel oxide in terms of metal was changed to 0.1 ppm with respect to the mass of the resin composition.

### Example II-3

Pellets of a resin composition were produced in the same manner as in Example II-1, except that the content of the nickel oxide in terms of metal was changed to 1.0 ppm with respect to the mass of the resin composition.

### Comparative Example II-1

Pellets of a resin composition were produced in the same manner as in Example II-1, except that no nickel oxide was used.

### Comparative Example II-2

Pellets of a resin composition were produced in the same manner as in Example II-1, except that the content of the nickel oxide in terms of metal was changed to 10 ppm with respect to the mass of the resin composition.

### Comparative Example II-3

Pellets of a resin composition were produced in the same manner as in Example II-1, except that the content of the nickel oxide in terms of metal was changed to 1.0 ppm with respect to the mass of the resin composition and no acetic acid was used.

### Comparative Example II-4

Pellets of a resin composition were produced in the same manner as in Example II-1, except that the unmodified PVA resin was used in place of the ethylene-modified PVA resin and the content of the nickel oxide in terms of metal was changed to 0.1 ppm with respect to the mass of the resin composition.

The resulting pellets of the resin compositions in Examples II-1 to II-3 and Comparative Examples II-1 to II-4 were used to evaluate the thermal stability as follows. The results are shown in Table II-1 below.

### Evaluation of Coloration due to Thermal Degradation

Using the pellets of each of the resin compositions obtained in Examples II-1 to II-3 and Comparative Examples II-1 to II-4 as a sample and using a visual analyzer IRIS VA400 (available from Alpha MOS), the ratio ("2183" + "2184" + "2185")/("1604" + "1605") of the sum of the color numbers "2183" (R: 136, G: 136, B: 120), "2184" (R: 136, G: 136, B: 136), and "2185" (R: 136, G: 136, B: 152) to the sum of the color numbers "1604" (R: 104, G: 72, B: 72) and "1605" (R: 104, G: 72, B: 88) was evaluated. The results are shown in Table II-1 below.

The color numbers "1604" and "1605" are color with deep yellow, and the color numbers "2183", "2184", and "2185" are color with pale yellow. A larger value of this ratio indicates better thermal stability and more effectively suppressed coloration of a sample.

A crushed material of the resulting pellets of each of the resin compositions of Examples II-1 to II-3 and Comparative Example II-4 was filled in a cylinder having an internal diameter of 32 mm and a height of 30 mm and the excess was struck off, and the filled material was subjected to yellow index (YI value) measurement by using a spectrocolorimeter (available from Nippon Denshoku Industries Co., Ltd.).

A larger value means that the resin composition is more yellow-colored after the heating and that thermal stability is poorer.

**Table II-1**

| | Type of PVA resin | Content of nickel compound in terms of metal (ppm) | Content of acetic acid and/or salt thereof (ppm) | Thermal Stability Evaluation | |
|---|---|---|---|---|---|
| | | | | Evaluation of coloration due to thermal degradation | YI value |
| Example II-1 | Ethylene-modified PVA resin | 0.001 | 500 | 13.0 | 33 |
| Example II-2 | Ethylene-modified PVA resin | 0.1 | 500 | 8.8 | 29 |
| Example II-3 | Ethylene-modified PVA resin | 1.0 | 500 | 6.5 | 31 |
| Comparative Example II-1 | Ethylene-modified PVA resin | 0 | 500 | 3.6 | - |
| Comparative Example II-2 | Ethylene-modified PVA resin | 10 | 500 | 4.1 | - |
| Comparative Example II-3 | Ethylene-modified PVA resin | 1.0 | 0 | 5.6 | - |
| Comparative Example II-4 | Unmodified PVA resin | 0.1 | 500 | 0.01 | 92 |

| | | | | | |
|---|---|---|---|---|---|
| * "-" represents that no measurement was performed. | | | | | |

As shown in Table II-1, the resin compositions of Examples II-1 to II-3, each containing the acetic acid and/or the salt thereof and a specific amount of the nickel compound incorporated in the ethylene-modified PVA resin, had excellent thermal stability and suppressed coloration due to thermal degradation compared to those of the resin composition of Comparative Example II-1, which did not contain the nickel compound, the resin composition of Comparative Example II-2, which contained the nickel compound in an amount larger than the specific range, the resin composition of Comparative Example II-3, which did not contain the acetic acid and/or the salt thereof, and the resin composition of Comparative Example II-4, which used the unmodified PVA resin.

Multilayer structures, molded bodies, and food packages each having a layer containing each of the resin compositions of Examples II-1 to II-3 also have excellent thermal stability and suppress coloration due to thermal degradation.

Specific embodiments of the present disclosure are described in Examples, but Examples are merely illustrative and are not to be construed as limiting. Various modifications apparent to those skilled in the art are intended to be within the scope of the present disclosure.

The present resin composition has excellent thermal stability and is capable of suppressing coloration due to thermal degradation. Thus, the present resin composition is useful as various packaging materials for various foods, seasonings such as mayonnaise and dressing, fermented foods such as miso, oil and/or fat foods such as salad oil, beverages, cosmetics, and medical supplies, for example, as well as materials for molded bodies that package agrochemicals, detergents, additives for civil engineering, disinfectants, dyes, and pigments, for example.

## Claims

1. A resin composition comprising a polyvinyl alcohol resin, a nickel compound, and a compound (X),
wherein the polyvinyl alcohol resin is an ethylene-modified polyvinyl alcohol resin containing 1 to 19 mol% of an ethylene structural unit,
wherein the compound (X) is at least one selected from the group consisting of an alkaline earth metal compound, acetic acid other than the alkaline earth metal compound, and a salt of the acetic acid other than the alkaline earth metal compound, and
wherein a content of the nickel compound in terms of metal is from 0.0001 to 2 ppm with respect to a mass of the resin composition.

2. The resin composition according to claim 1, wherein the resin composition comprises the alkaline earth metal compound as the compound (X).

3. The resin composition according to claim 2, wherein a content of the alkaline earth metal compound in terms of metal is from 0.0001 to 1 ppm with respect to the mass of the resin composition.

4. The resin composition according to claim 2 or 3, wherein the resin composition comprises a magnesium compound as the alkaline earth metal compound.

5. The resin composition according to any one of claims 2 to 4, wherein a mass ratio of a content of the alkaline earth metal compound in terms of metal to the content of the nickel compound in terms of metal is from 0.000005 to 10000.

6. The resin composition according to any one of claims 1 to 5, wherein the resin composition comprises the acetic acid other than the alkaline earth metal compound and/or the salt thereof, as the compound (X).

7. The resin composition according to claim 6, wherein a content of the acetic acid and/or the salt thereof is from 10 to 10000 ppm with respect to the mass of the resin composition.

8. The resin composition according to claim 6 or 7, wherein a mass ratio of a content of the acetic acid and/or the salt thereof to the content of the nickel compound is from 5 to 100000000.

9. The resin composition according to any one of claims 1 to 8, wherein the content of the nickel compound in terms of metal is 0.0001 ppm or greater and less than 0.5 ppm with respect to the mass of the resin composition.

10. The resin composition according to any one of claims 1 to 9, wherein the polyvinyl alcohol resin is non-crosslinked.

11. A molding material comprising the resin composition according to any one of claims 1 to 10.

12. The molding material according to claim 11, wherein the molding material is in a pellet form.

13. A multilayer structure comprising a layer containing the resin composition according to any one of claims 1 to 10.

14. A molded body comprising the multilayer structure according to claim 13.

15. A food package comprising the multilayer structure according to claim 13.

16. A method for producing the resin composition according to any one of claims 1 to 10, the method comprising:
melt-mixing a composition raw material containing the polyvinyl alcohol resin and the nickel compound.

17. A method for producing the multilayer structure according to claim 13, the method comprising:
melt-molding a layer containing the resin composition.
